(19) Europäisches Patentamt
European Patent Office
Office européen des brevets

(11) **EP 2 317 461 A1**

(12) **EUROPEAN PATENT APPLICATION**

(43) Date of publication:
**04.05.2011 Bulletin 2011/18**

(51) Int Cl.:
***G06Q 10/00*** *(2006.01)*

(21) Application number: **10188998.8**

(22) Date of filing: **27.10.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.10.2009 IN DE22482009**

(71) Applicant: **General Electric Company
Schenectady, NY 12345 (US)**

(72) Inventors:
• **Vittal, Sameer
Atlanta, GA 30339 (US)**

• **Hoyte, Scott Mordin
Greenville, SC 29615 (US)**
• **Pandey, Achalesh Kumar
Greenville, SC 29615 (US)**
• **Sastry, Subramaniam Krishnakumar
Atlanta, GA 30339 (US)**
• **Nanda, Subrat
560066, Bangalore (IN)**

(74) Representative: **Gray, Thomas
GE International Inc.
Global Patent Operation - Europe
15 John Adam Street
London WC2N 6LU (GB)**

(54) **Turbine operation degradation determination system and method**

(57)     A system for creating a financial risk model for at least one turbine (60) includes a database (401) storing operational characteristics of one or more turbines and a processing module (402) coupled to the database that receives information from the database and creates the financial risk determination. The processing module includes a performance degradation modeler (416) that receives performance data and creates a model there from and a financial risk calculator (424) coupled to the performance modeler that determines financial exposure to a contract based on the model received from the performance modeler.

FIG. 4

EP 2 317 461 A1

**Description**

BACKGROUND OF THE INVENTION

The subject matter disclosed herein relates to turbines and, in particular, to modeling turbine performance degradation based on empirical results.

All turbines experience losses in performance with time. Gas turbine performance degradation can be classified as a recoverable or non-recoverable loss. Recoverable loss is usually associated with compressor fouling and can be partially rectified by water washing or, more thoroughly, by mechanically cleaning the compressor blades and vanes after opening the unit. Non-recoverable loss is due primarily to increased turbine and compressor clearances and changes in surface finish and airfoil contour. Because this loss is caused by reduction in component efficiencies, it cannot be recovered by operational procedures, external maintenance or compressor cleaning, but only through replacement of affected parts at recommended inspection intervals.

Quantifying performance degradation is difficult because consistent, valid field data is hard to obtain. Correlation between various sites is impacted by variables such as mode of operation, contaminants in the air, humidity, fuel and diluent injection levels for NOx. Another problem is that test instruments and procedures vary widely, often with large tolerances.

Typically, performance degradation during the first 24,000 hours of operation (the normally recommended interval for a hot gas path inspection) is 2% to 6% from the performance test measurements when corrected to guaranteed conditions. This assumes degraded parts are not replaced. If replaced, the expected performance degradation is 1% to 1.5%. Recent field experience indicates that frequent off-line water washing is not only effective in reducing recoverable loss, but also reduces the rate of non-recoverable loss.

Once the gas turbine is installed, a performance test is usually conducted to determine power plant performance. Power, fuel, heat consumption and sufficient supporting data may be recorded to enable as tested performance information.

Equipment providers to power generator facilities typically provide performance guarantees to customers. If gas turbine or combined cycle plant performance is below contractual values, the provider may have to pay penalties to customers. If performance is better than guaranteed values then the provider may receive incentives. Any rational actor will attempt to maximize earnings while maintaining customer satisfaction.

Currently, there are several tools, such as software tools, available that can calculate the thermal performance of gas turbines. These tools are restricted to "data matching" observed sensor data with underlying physics-based models, and do not determine performance deterioration in a statistical sense. A measurement used in the energy industry to calculate how efficiently a generator uses heat energy shall be referred to herein as a "heat rate." Heat rate may be expressed as the number of BTUs of heat required to produce one kilowatt-hour of energy. Operators of generating facilities can make reasonably accurate estimates of the amount of heat energy a given quantity of any type of fuel, so when this is compared to the actual energy produced by the generator, the resulting figure tells how efficiently the generator converts that fuel into electrical energy.

BRIEF DESCRIPTION OF THE INVENTION

According to one aspect of the invention, a system for creating a financial risk model for at least one turbine is disclosed. The system of this aspect includes a database storing operational characteristics of one or more turbines and a processing module coupled to the database that receives information from the database and creates the financial risk determination. The processing module includes a performance degradation modeler that receives performance data and creates a model there from and a financial risk calculator coupled to the performance modeler that determines financial exposure to a contract based on the model received from the performance modeler.

According to another aspect of the invention, a computer implemented method of for creating a financial risk assessment for a turbine is disclosed. The method includes receiving performance related financial data at a risk analyzer module; comparing the performance related financial data to heat rate model for a turbine; and determining a risk of financial loss from the comparison.

According to yet another aspect of the invention, a system including one or more turbines is disclosed. The system also includes at least one sensor coupled to one or the one or more turbines and a database storing operational characteristics of one or more turbines received from the at least one sensor. The system also includes a processing module coupled to the database that receives information from the database and creates the financial risk determination. The processing module includes a performance degradation modeler that receives performance data and creates a model there from and a financial risk calculator coupled to the performance modeler that determines financial exposure to a contract based on the model received from the performance modeler.

These and other advantages and features will become more apparent from the following description taken in conjunction with the drawings.

BRIEF DESCRIPTION OF THE DRAWINGS

There follows a detailed description of embodiments of the invention by way of example only with reference to the accompanying drawings, in which:

Fig. 1 is dataflow diagram showing a system according to an embodiment of the present invention;

Fig. 2 shows a computing system on which embodiments of the present invention may be implanted;

Fig. 3 shows a method according to an embodiment of the present invention; and

Fig. 4 is more detailed dataflow diagram for the system shown in Fig. 1.

DETAILED DESCRIPTION OF THE INVENTION

Embodiments disclosed herein may predict performance deterioration (heat rate) via probabilistic models. One or more embodiments may be able to determine a financial impact (in terms of contractual services bonus/penalty calculation) to providers based on observed and calculated heat rate degradation. In addition, an embodiment may automatically detect and diagnose performance anomalies to a pre-specified probability of detection.

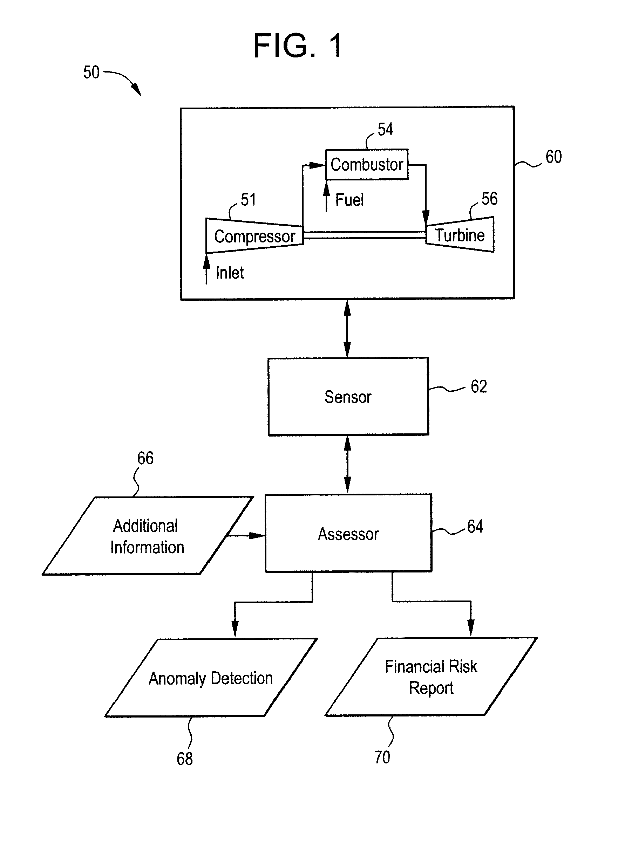

Fig. 1 shows a dataflow diagram of a system 50 according to one embodiment. The system 50 may include one or more turbines systems 60. The turbine 60 may be any type of type of turbine. In one embodiment, the turbine 60 may be a gas turbine.

In the event the turbine system 60 is a gas turbine, the turbine system 60 may include a compressor 52 to draw in and compress air; a combustor 54 (or burner) to add fuel to heat the compressed air; and a turbine 56 to extract power from the hot air flow. The gas turbine is an internal combustion (IC) engine employing a continuous combustion process.

The system 50 may also include a sensor 62 coupled to the turbine 60. The sensor 62 receives information from the turbine 60 and, based on that information, the system 50 may determine a heat rate of the turbine 60.

The sensor 62 is coupled to a performance analyzer 64. In one embodiment, the analyzer 64 receives information from the sensor 62 and additional information 66 from additional information sources (not shown) to produce one or both of an anomaly detection 68 or a financial risk report 70. The additional information 66 may include, but is not limited to, historical performance data for one or more turbine systems 60.

The performance analyzer 64 may be implemented in hardware, software, or some combination thereof (firmware). The analyzer 64 receives the information from the sensor 62 and the additional information 66. As intermediary steps, the assessor may produce filtered data based on historical performance and a heat rate degradation prediction. The analyzer 64 may also include mechanisms for determining a financial risk calculation based on the financial terms in, for example, a contract.

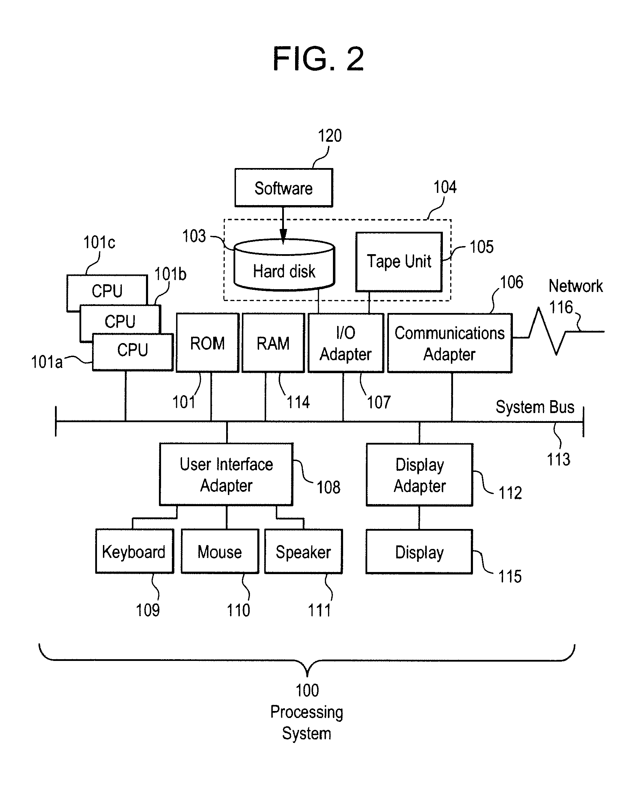

Referring to Fig. 2, there is shown an embodiment of a processing system 100 for implementing the teachings herein. The processing system 100 may include the assessor 64 (Fig. 1). In this embodiment, the system 100 has one or more central processing units (processors) 101a, 101b, 101c, etc. (collectively or generically referred to as processor(s) 101). In one embodiment, each processor 101 may include a reduced instruction set computer (RISC) microprocessor. Processors 101 are coupled to system memory 114 and various other components via a system bus 113. Read only memory (ROM) 102 is coupled to the system bus 113 and may include a basic input/output system (BIOS), which controls certain basic functions of system 100.

Fig. 2 further depicts an input/output (I/O) adapter 107 and a network adapter 106 coupled to the system bus 113. I/O adapter 107 may be a small computer system interface (SCSI) adapter that communicates with a hard disk 103 and/or tape storage drive 105 or any other similar component. I/O adapter 107, hard disk 103, and tape storage device 105 are collectively referred to herein as mass storage 104. A network adapter 106 interconnects bus 113 with an outside network 116 enabling data processing system 100 to communicate with other such systems. A screen (e.g., a display monitor) 115 is connected to system bus 113 by display adaptor 112, which may include a graphics adapter to improve the performance of graphics intensive applications and a video controller. In one embodiment, adapters 107, 106, and 112 may be connected to one or more I/O busses that are connected to system bus 113 via an intermediate bus bridge (not shown). Suitable I/O buses for connecting peripheral devices such as hard disk controllers, network adapters, and graphics adapters typically include common protocols, such as the Peripheral Components Interface (PCI). Additional input/output devices are shown as connected to system bus 113 via user interface adapter 108 and display adapter 112. A keyboard 109, mouse 110, and speaker 111 are all interconnected to bus 113 via user interface adapter 108, which may include, for example, a Super I/O chip integrating multiple device adapters into a single integrated circuit.

Thus, as configured in Fig. 2, the system 100 includes processing means in the form of processors 101, storage means including system memory 114 and mass storage 104, input means such as keyboard 109 and mouse 110, and output means including speaker 111 and display 115. In one embodiment, a portion of system memory 114 and mass storage 104 collectively store an operating system to coordinate the functions of the various components shown in Fig. 2.

It will be appreciated that the system 100 can be any suitable computer or computing platform, and may include a terminal, wireless device, information appliance, device, workstation, mini-computer, mainframe computer, personal digital assistant (PDA) or other computing device. It shall be understood that the system 100 may include multiple computing devices linked together by a communication network. For example, there may exist a client-server relationship between two systems and processing may be split between the two.

The system 100 may operate on any known or later developed operating system. The system 100 also includes a network interface 106 for communicating over a network 116. The network 116 can be a local-area network (LAN), a metro-area network (MAN), or wide-area network (WAN), such as the Internet or World Wide Web.

Users of the system 100 can connect to the network through any suitable network interface 116 connection, such as standard telephone lines, digital subscriber line, LAN or WAN links (e.g., T1, T3), broadband connections (Frame Relay, ATM), and wireless connections (e.g., 802.11(a), 802.11(b), 802.11(g)).

As disclosed herein, the system 100 may include machine-readable instructions stored on machine readable media (for example, the hard disk 104) to execute one or more methods disclosed herein. As discussed herein, the instructions may be referred to as "software" 120. The software 120 may be produced using software development tools as are known in the art. The software 120 may include various tools and features for providing user interaction capabilities as are known in the art.

In some embodiments, the software 120 is provided as an overlay to another program. For example, the software 120 may be provided as an "add-in" to an application (or operating system). Note that the term "add-in" generally refers to supplemental program code as is known in the art. In such embodiments, the software 120 may replace structures or objects of the application or operating system with which it cooperates.

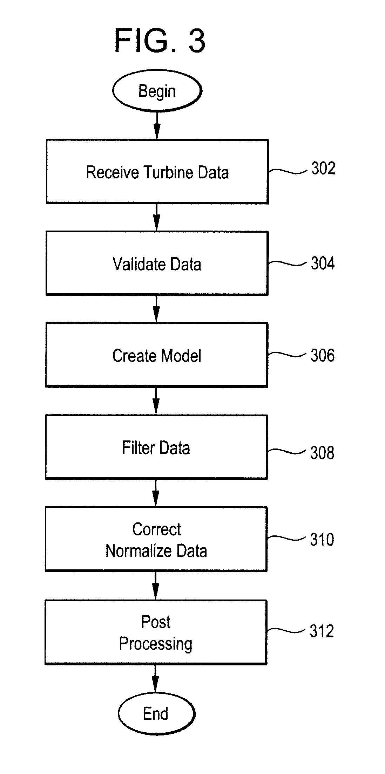

Fig. 3 shows a high level flow diagram of a method according to one embodiment. The method begins at a block 302 where historical data about one or more turbines is received. This data may include, for example, general performance data. In one embodiment, the general performance data may be stored in 5 minute time intervals and include 132 tags (including raw and calculated data). This data may be received from, for example, a sensor or a database that stores data received from a sensor.

The method may include an optional data validation block 304. Data validation may include determining that the data received is for a continuous time period. Of course, other data validation may be performed as well based on the circumstances.

At a block 306 a turbine performance model is created from the received data. In one embodiment, the turbine performance calculates the heat rate over time for one or more turbines from the received information. The manner of creating the performance model may be known in the art. This may include a thermodynamic analysis of the various values received. In one embodiment, raw heat rate data may be created at block 306. In one embodiment, the raw heat data may be utilized to form a graph of heat rate versus time. Of course, times of in-operation or during a wash may lead to discontinuities in the graph. To that end, the graphs (or date representative of them) may be broken into the time periods between such discontinuities, in one embodiment.

The model data may then be filtered at a data filtration block 308. The data filtering may include one or both of data smoothing or an operating mode filtration. In one embodiment, at block 308 data is filtered to separate noise from a signal of interest. The data filtration may utilize one or more of expert rules, a median filter, non-linear least square filters, exponential smoothing or any other filtration technique. In one embodiment, the data filtration includes filtering based on operation such as steady state and transient state filtration.

At a block 310, the filtered date may then be corrected, normalized, or both. Data normalization may reduce variations due to ambient/operational variations. In addition, certain physics based corrections to normalize the data may be utilized. In addition, the data driven normalization methods (statistical methods) may be utilized.

At a block 312, the filtered and corrected and/or normalized data is then subjected to one or more post processing steps. These steps may include, but are not limited to, charting the data, detecting change in the data, performance degradation modeling and model updating, and anomaly detection. As discussed below, the creation of a model may include variation of the model based on Bayesian updating techniques or other model updating techniques like Kalman Filters, Weighted Least Square filter, etc.

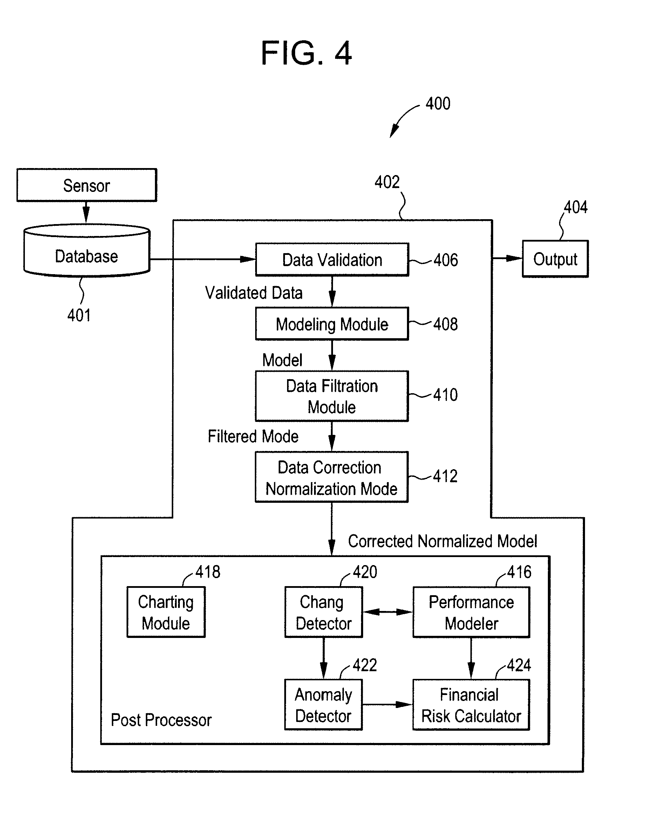

Fig. 4 shows a system 400 on which some or all of the method described in Fig. 3 may be implemented. The following discussion of Fig. 4 also includes more detailed description of the post processing described above with respect to block 310 of Fig. 3.

The system 400 may include a database 401 and a processing module 402. The processing module 402 receives data from the database 401 and creates an output 404. The data from the database 402 may be, for example, data received from one or more sensors 403 coupled to gas turbines. This data may include any type of data that may be observed during the operation of a turbine including, but not limited to, an amount of input fuel, output power, temperature, cycle information, repair or inspection information, site atmospheric conditions or any other information.

The output 404 could be any type of output. In one embodiment, the output 404 may be a report, a recommendation or a dashboard entry. Of course, the output 404 could be any type of output and could be provided to a user or to another processing device. In addition, the output 404 may be stored in the database 401 in some cases.

The data received from the database 401 may optionally be validated by a data validator 406. Data validation may include determining that the data received is for a continuous time period. Of course, other data validation may be performed as well based on the circumstances.

Validated (or un-validated) data is passed to a modeling module 408. The modeling module 408 may perform one or more thermodynamic calculations to create a model of the operation of the turbine. In one embodiment, the modeling module may create a representation of the heat rate of a turbine over time. In one embodiment, the model may be represented as a graph. It shall be understood that data from multiple turbines may be modeled together in one embodiment to create a model for a particular class or type of turbine.

The system 400 may also include a data filtration module 410 coupled to the modeling module 408. The data filtration module 410 reduces variation in the model (the model being created from several runs or turbines) that it received from the modeling module 408. The data filtration module 410 may apply an expert rule, a median filter, a non-linear square filter, an exponential smoothing filter or other filter. Regardless of the filter applied, the data filtration module 410 creates a filtered time series for one or more turbine parameters. For example, the 410 may create a filtered time series representation of heat rate for a particular turbine or class of turbines.

The system 400 may also include a data correction and normalization module 412 coupled to the data filtration module 410. Corrections and normalizations will be referred to herein collectively as normalization and shall refer to applying factors so that turbines regardless of size or location may be modeled on the same relative scale.

The system 400 may also include a post processing module 414. The post processing module 414 receives the normalized data from the data correction and normalization module 412 and creates the output 404. The post-processing module 414 may include one or more sub modules. Some or all of these modules may work together in one embodiment depending on configuration.

In one embodiment, the post-processing module 414 includes a performance modeler 416. In a particular embodiment described below, the performance modeler is a performance degradation modeler. In general, the performance degradation modeler 416 creates a predictive model based on the received model that may predict performance degradation over time. In one embodiment, based on the received model, the performance degradation modeler may be able to create a function that describes the relationship of a parameter to time. For example, the performance degradation modeler 416 may apply the following rule:

$$f(HR\_Deg) = \phi\big[(HR - \mu)/\sigma\big]$$

*where*

$$\mu = c + a * Hours + b * CPR$$

In the above equation, f(hr) is the normal distribution of heat rate degradation, $\mu$ is the mean value, $\sigma$ is the standard deviation, a, b, and c are scaling variables that may be updated, Hr_Deg is heat rate degredation, Hours is the number of fired hours from last wash or maintenance and CPR is the compression ratio. The Hours variable is needed in the above equation for $\mu$ while other variables may or may not be available.

From the above model, many different useful pieces of information may be created. For example, the effect of washes on heat rate may be determined. In addition, varying the times when the turbine is washed in the model may allow for operational effects to be observed.

It shall be understood that while the model created by the performance degradation modeler 416 may at times become incorrect as the turbine ages or degradation profile changes. Accordingly, the performance degradation modeler 416 may includes Bayesian Model updating algorithms for updating the degradation model parameters based upon new observations. The updated performance degradation model is used for predicting performance degradation. Model updating technique is not limited to Bayesian and other techniques like Kalman filter, weighted least square filter etc. can be used. The post-processing module 414 may include a charting module 418 that may show one or more performance models on the same display. This may give visual evidence that the performance has changed.

In addition, the post-processing module 414 may also include a change detector 420. The change detector 420 may apply change detection algorithms to detect statistically significant change in operational and performance parameters. These changes may be due to real operational issues such as water wash, hardware failure, maintenance, sensor calibration issues, software configuration issues, data quality issues, cycle deck configuration issues (wrong control curve, wrong cycle deck model, etc.). To that end, the change detection algorithms of the change detector 420 may employ a control chart approach, a 2 sample t test, a likelihood ratio test, hoteling T2 square test or any other appropriate test or fusion of multiple methods.

In one embodiment, the change detector 420 may determine that a change has occurred and cause an anomaly detector 422 to analyze the model and the change. In one embodiment, based on the change and the model, the anomaly detector may create an output of one or possible causes of a problem or a proactive recommendation. To that end, the anomaly detector 422 may apply expert rules, fuzzy reasoning, feature extraction, AI methods, empirical methods or other computer reasoning techniques. For instance, an unexplained (change detected) rise in back pressure may indicate that the diffuser needs to be inspected.

A financial risk calculator 424 to calculate financial risk for sites having performance guarantees may utilize the model created by the performance modeler 416. The model may allow for a provider to understand when the guarantees may or may not be met. For example, because a model has been created, a user may vary the number or timing of washes. This will in turn, create an output efficiency chart that may be compared to the financial considerations. Through either trial and error or adaptive reasoning, the financial risk calculator may determine which wash schedule is advantageous. It shall be understood that the financial risk calculator 424 may include stored, or have access to, financial considerations from one or contracts between a provider and a customer. This may further allow the provider to adjust, for example, when washes are conducted to possibly enhance profit or achieve other desirable goals.

In one embodiment, the financial risk calculator 424 reads in variables related to current and future degraded performance of the gas turbine, as well as contract terms and conditions and historical data related to performance improvements in gas turbine when pre-determined maintenance activities are performed (Maintenance Effectiveness Factors). The calculator 424 may perform a Monte-Carlo simulation, simulating multiple performance degradation scenarios in time, and estimate the probability of exceeding pre-defined upper and lower bounds on performance. The simulation may also consider variations due to measurement errors, calibration errors and a "dead band" where variations in performance have no impact on financial risk. These probabilities are use to estimate the financial bonus or liquidated damages that would apply to that turbine. In the case of multiple turbines that are associated with a given contract as well as multiple contracts related to a single customer, the risk calculator 424 may perform a full portfolio simulation that includes potential correlation between multiple units. The risk calculator 424 may allow users to perform "what-if" scenarios, where the user specifies a time for performing a maintenance activity (e.g. water wash) and generates the financial impact for each scenario. The risk calculator may also allow users to improve the timing of these maintenance activities to either enhance revenue, reduce liquidated damages, reduce associated equipment downtime or some combination of the above multi-objective improvement). For select cases, the calculator 424 may also calculate risk using a closed-form solution and eliminate the need to run Monte-Carlo simulations. This is achieved by using FORM and SORM algorithms (First and Second Order Reliability Method) applied to performance-based limit states. The calculator 424 may also be used for risk-based contract pricing as well as in improving the nature and timing of maintenance activities like online and offline water washes.

In some instances, the model created may not match newly received data. To that end, the model may be updated as new data is received based on, for example, Bayesian updates or the like.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

For completeness, various aspects of the invention are now set out in the following numbered clauses:

1. A system for creating a financial risk model for at least one turbine, the system comprising:

a database storing operational characteristics of one or more turbines;

a processing module coupled to the database that receives information from the database and creates the financial risk determination, the processing module including:

a performance degradation modeler that receives performance data and creates a model there from; and

a financial risk calculator coupled to the performance modeler that determines financial exposure to a contract based on the model received from the performance modeler.

2. The system of clause 1, wherein the processing module further includes:

a modeling module that converts the information received from the database to a parameter over time representation.

3. The system of clause 2, wherein the parameter is a heat rate.

4. The system of clause 2, wherein the processing module further includes:

a filtration module that filters the representation created by the modeling module to create a filtered representation.

5. The system of clause 4, wherein the filtration module applies an operating mode filter or a data smoothing filter or both.

6. The system of clause 4, wherein the processing module further includes:

a normalization module coupled to the filtration module that normalizes the filtered representation based on physics based corrections, the output being the performance data.

7. The system of clause 6, wherein the parameters are heat rate and power output.

8. The system of clause 1, further including:

an anomaly detector that determines, based on a change in performance parameters, one or more possible operating anomalies for the turbine.

9. The system of clause 1, wherein the performance degradation modeler applies an update algorithm when the model does not match one or more time periods.

10. A computer implemented method of for creating a financial risk assessment for a turbine, the method comprising:

receiving performance related financial data at a risk analyzer module;

comparing the performance related financial data to heat rate degradation model for a turbine; and

determining a risk of financial loss from the comparison.

11. The method of clause 10, further comprising:

creating the heat rate model.

12. The method of clause 11, wherein creating the heat rate model includes:

receiving values from a data base that represent sensor values at the turbine; and

converting the values to time related heat rate values.

13. The method of clause 12, wherein creating the heat rate model further includes:

filtering or smoothing the time related heat rate values; and

normalizing the filtered or smoothed values to a standard.

14. The method of clause 10, wherein the performance related financial data is based on terms in a contract between a supplier and a customer.

15. A system comprising:

one or more turbines;

at least one sensor coupled to one or the one or more turbines;

a database storing operational characteristics of one or more turbines received from the at least one sensor;

a processing module coupled to the database that receives information from the database and creates the financial risk determination, the processing degradation module including:

a performance degradation modeler that receives performance data and creates a model there from; and

a financial risk calculator coupled to the performance modeler that determines financial exposure to a contract based on the model received from the performance modeler.

16. The system of clause 15, wherein the processing module further includes:

a modeling module that converts the information received from the database to a parameter over time representation.

17. The system of clause 16, wherein the parameter is a heat rate or other performance parameter.

18. The system of clause 16, wherein the processing module further includes:

a normalization module that normalizes the parameter over time representation based on physics based corrections, the output being performance data.

19. The system of clause 18, wherein the parameter is a heat rate.

**Claims**

1. A system for creating a financial risk model for at least one turbine (60), the system comprising:

a database(401) storing operational characteristics of one or more turbines;

a processing module (402) coupled to the database that receives information from the database and creates the financial risk determination (70), the processing module including:

a performance degradation modeler (416) that receives performance data and creates a model there from; and

a financial risk calculator (424) coupled to the performance modeler that determines financial exposure to a contract based on the model received from the performance modeler.

2. The system of claim 1, wherein the processing module further includes:

a modeling module (408) that converts the information received from the database to a parameter over time representation.

3. The system of claim 2, wherein the parameter is a heat rate.

4. The system of claim 2, wherein the processing module further includes:

a filtration module (410) that filters the representation created by the modeling module to create a filtered representation.

5. The system of claim 4, wherein the filtration module applies an operating mode filter or a data smoothing filter or both.

6. The system of claim 4, wherein the processing module further includes:

a normalization module (412) coupled to the filtration module that normalizes the filtered representation based on physics based corrections, the output being the performance data.

7. The system of claim 6, wherein the parameters are heat rate and power output.

8. The system of any of the preceding claims, further including:

an anomaly detector (422) that determines, based on a change in performance parameters, one or more possible operating anomalies for the turbine.

9. The system of any of the preceding claims, wherein the performance degradation modeler applies an update algorithm when the model does not match one or more time periods.

10. A computer implemented method of for creating a financial risk assessment for a turbine, the method comprising:

receiving performance related financial data at a risk analyzer module;
comparing the performance related financial data to heat rate degradation model for a turbine; and
determining a risk of financial loss from the comparison.

11. The method of claim 10, further comprising:

creating the heat rate model.

12. The method of claim 11, wherein creating the heat rate model includes:

receiving values from a data base that represent sensor values at the turbine; and
converting the values to time related heat rate values.

13. The method of claim 12, wherein creating the heat rate model further includes:

filtering or smoothing the time related heat rate values; and
normalizing the filtered or smoothed values to a standard.

14. The method of any of claims 10 to 13, wherein the performance related financial data is based on terms in a contract between a supplier and a customer.

# FIG. 1

# FIG. 2

# FIG. 3

```
                    ( Begin )
                        │
                        ▼
        ┌───────────────────────────────┐
        │     Receive Turbine Data      │──── 302
        └───────────────────────────────┘
                        │
                        ▼
        ┌───────────────────────────────┐
        │         Validate Data         │──── 304
        └───────────────────────────────┘
                        │
                        ▼
        ┌───────────────────────────────┐
        │         Create Model          │──── 306
        └───────────────────────────────┘
                        │
                        ▼
        ┌───────────────────────────────┐
        │          Filter Data          │──── 308
        └───────────────────────────────┘
                        │
                        ▼
        ┌───────────────────────────────┐
        │           Correct             │──── 310
        │       Normalize Data          │
        └───────────────────────────────┘
                        │
                        ▼
        ┌───────────────────────────────┐
        │            Post               │──── 312
        │         Processing            │
        └───────────────────────────────┘
                        │
                        ▼
                    (  End  )
```

# FIG. 4

400

Sensor

Database

401

402

Data Validation 406

Validated Data

Modeling Module 408

Model

Data Filtration Module 410

Filtered Mode

Data Correction Normalization Mode 412

Corrected Normalized Model

404

Output

Post Processor

418
Charting Module

420
Chang Detector

416
Performance Modeler

422
Anomaly Detector

424
Financial Risk Calculator

Europäisches
Patentamt

European
Patent Office

Office européen
des brevets

# EUROPEAN SEARCH REPORT

**Application Number**

EP 10 18 8998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Notice from the European Patent Office dated 1 October 2007 concerning business methods", OFFICIAL JOURNAL OF THE EUROPEAN PATENT OFFICE, EPO, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. *<br>----- | 1-14 | INV.<br>G06Q10/00<br><br>TECHNICAL FIELDS SEARCHED (IPC)<br><br>G06Q |

The present search report has been drawn up for all claims

| Place of search | Date of completion of the search | Examiner |
|---|---|---|
| The Hague | 21 February 2011 | De Smet, Michaël |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................

& : member of the same patent family, corresponding
    document

EPO FORM 1503 03.82 (P04C01)